Europäisches Patentamt

European Patent Office

Office européen des brevets

(19)

(11) Publication number: **0 186 961**
A1

## (12) EUROPEAN PATENT APPLICATION

(21) Application number: 85308393.9

(22) Date of filing: 18.11.85

(51) Int. Cl.⁴: **B 60 R 22/20**

(30) Priority: 19.11.84 GB 8429138

(43) Date of publication of application: 09.07.86
Bulletin 86/28

(84) Designated Contracting States: **AT BE CH DE FR GB IT
LI LU NL SE**

(71) Applicant: **ASE (UK) LIMITED, Norfolk Street, Carlisle
Cumbria CA2 5HX (GB)**

(72) Inventor: **Desborough, John, 22 Cartmell Drive, Carlisle
Cumbria (GB)**

(74) Representative: **Ackroyd, Robert et al, POLLAK
MERCER & TENCH High Holborn House 52-54 High
Holborn, London WC1V 6RY (GB)**

(54) **Adjustable shoulder anchorage.**

(57) The anchorage consists of a track (10) and a carriage (12)
which is slidable between side walls (26, 27) of the track. The
carriage has attached a running loop (16) of a vehicle seat belt
(18). Apertures (44) in the side walls define positions at which the
carriage can be latched to the track by means of locking tabs (62
in Figure 7) which protrude laterally from the carriage. The locking
elements are movable perpendicularly to the direction of sliding of
the carriage and are freed from the apertures by virtue of the track
side walls being outwardly-flared in the region of the apertures.
The apertures themselves widen in order to facilitate reception of
the tabs in the apertures.

Adjustable Shoulder Anchorage.

Description

This invention relates to adjustable shoulder anchorages for use in vehicle seat belt systems. Such anchorages allow the position of the upper end of the diagonal part of the seat belt to be adjusted to accommodate different users and different vehicle seat positions. The seat belt may be of the inertia reel or the static type. The anchorages are used in, for example, motor vehicles where they are often fitted to the "B" post of the body of the vehicle.

An adjustable shoulder anchorage should be straightforward to use, provide appropriate security and, desirably, consist of few components and be inexpensive and convenient to manufacture. The present invention aims to provide an anchorage which is advantageous over known anchorages in some or all of these respects.

The anchorage provided by the present invention comprises a track between opposed side walls of which a carriage having support means for a belt of a seat belt system is located for sliding movement along the track, each side wall having a plurality of spaced-apart apertures or recesses defining positions at which the carriage can be locked to the track and the carriage having manually-operable locking means which include locking elements which protrude laterally from the carriage at respective sides thereof and are movable in a direction transverse to the plane of movement of the carriage between a locking position in which they are engaged in respective side wall apertures or recesses and the carriage is locked to the track and a released position in which they are disengaged from the apertures or recesses and the carriage is released for movement along the track.

The track side walls are preferably connected by a web portion which gives the track a channel shape. With such a track, the belt support means may protrude through a longitudinal slot in the web portion and, further, the carriage may be supported on inturned flanges at the free edges of the side walls.

The side walls may be apertured to receive the locking elements in the released position but, conveniently, the side walls are shaped to accommodate the locking elements between the side walls and the carriage in the release position. In this latter construction, the track will have a groove extending along the inner surface of each side wall and accommodating the locking elements in the release position. The apertures or recesses in the side walls will open into one side wall of the grooves to allow the locking elements to move from their respective grooves into the apertures. Conveniently, the grooves are bounded along one longitudinal edge by the inturned flanges mentioned above.

Advantageously, the extent of the side wall apertures or recesses longitudinally of the track increases in the direction of movement of the locking elements from the locked to the release position from an extent substantially equal to that of the locking elements. This widening of the apertures or recesses facilitates engagement of the locking elements with the apertures because it makes it unnecessary for the carriage to be in precise register with the apertures for locking to take place.

Preferably, the side walls of the grooves into which the apertures or recesses open are inclined such that the depth of the grooves decreases in the direction of movement of the locking elements from the released to the locking position.  In this arrangement the apertures or recesses will extend into the inclined side walls of the grooves and their widths will preferably decrease in the released-to-locking direction of the locking elements.

Preferably, the locking elements are laterally-extending tabs on a generally-planar locking member which is mounted on a body member of the carriage for movement in response to operation of the locking means.  The locking member is conveniently pivotally-mounted on the carriage body member and, in any arrangement, is preferably resiliently biassed into the locking position.  The locking means preferably include a manually-operable push button for releasing the locking means.

In some embodiments, the carriage includes a component of plastics material, for example ABS plastics, which provides the surfaces on the carriage which are in sliding contact with the track. When the track is channel-shaped and has inturned flanges as mentioned above, these flanges are advantageously located in respective recesses in the plastics component.

Preferably, the plastics component closes the open face of a channel-shaped carriage body which has a locking member pivotally-mounted on laterally projecting elements projecting into cut-outs in the side walls of the body, the plastics component having formations also protruding into the cut-outs to close the cut-outs and retain the locking member.

An embodiment of the invention will now be described by way of example with reference to the drawings, in which:

Figure 1 is a side view of an adjustable shoulder anchorage,

Figure 2 is a front elevation view of the track of the anchorage of Figure 1,

Figure 3 is a horizontal cross-section taken on the line III-III of Figure 2,

Figure 4 is a portion of Figure 3 on an enlarged scale,

Figure 5 is a vertical sectional view of the carriage of the anchorage of Figure 1, showing a locking member of the carriage in its locking position,

Figure 6 is a view similar to Figure 5 showing the locking member in its released position, and

Figure 7 is an end view of the carriage of Figure 5.

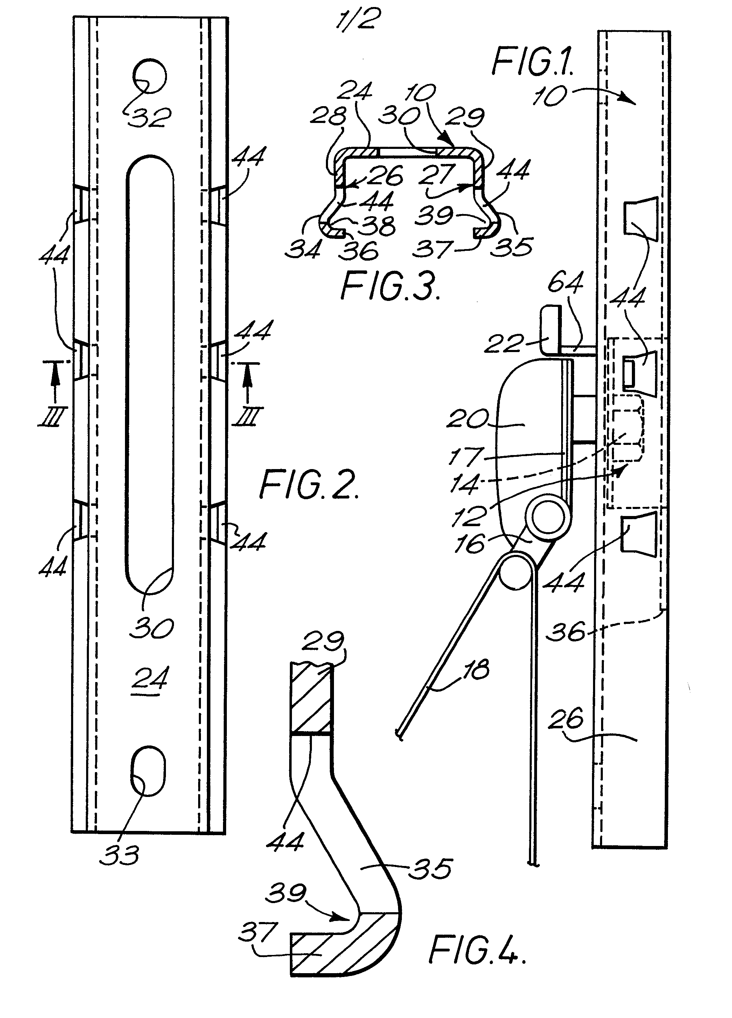

The adjustable anchorage of Figure 1 has a channel-section track 10 along which a carriage 12 is slidable. The carriage 12 has support means for a vehicle seat belt. In this embodiment, these means comprise a mounting bolt 14 to which a running loop 16 directing the upper end of the diagonal run of a seat belt 18 towards a seat belt retractor is attached by means of a bracket 17. A cover 20 of plastics material is a snap-fit over the bracket 17. Anchorages according to the present invention are equally suitable for use with static seat belt systems, in which case the running loop is absent and the upper end of the diagonal run of the seat belt is attached to a bracket fixed to the carriage. A manually-operable push button 22 for freeing the carriage for movement on the track 10 is positioned adjacent the running loop cover 20.

As can be seen from Figure 3, the track 10 has a channel-shape and comprises a web portion 24 and side walls 26, 27. The web portion 24 has a longitudinal slot 30 (see Figure 2) through which the mounting bolt 14 of the carriage 12 protrudes. Holes 32, 33 in the web portion of the track 10 allow it to be attached to a motor vehicle, for example to the "B" pillar of the vehicle. The side walls 26, 27 of the track 10 have portions 28, 29 perpendicular to the web portion 24 and outwardly-flared portions 34, 35 which at their free edges terminate in inwardly-turned flanges 36, 37 which thus form in the side walls 26, 27 grooves 38, 39 of approximately triangular cross-section. Figure 4 shows the shape of one side wall 27 in more detail.

Each side wall 26, 27 has three spaced-apart apertures 44 which each extend through both the perpendicular portions 28, 29 and the outwardly-flared portions 34, 35 of the side walls 26, 27. As can be seen from Figures 1 and 2, the portions of the apertures 44 lying in the outwardly-flared portions 34, 35 themselves flare outwardly towards the free edges of the side walls 26, 27. The apertures 44 are arranged in transversely-aligned pairs and therefore define three positions at a selected one of which the carriage 12 can be locked at the track 10 and the position of the running loop 16 adjusted.

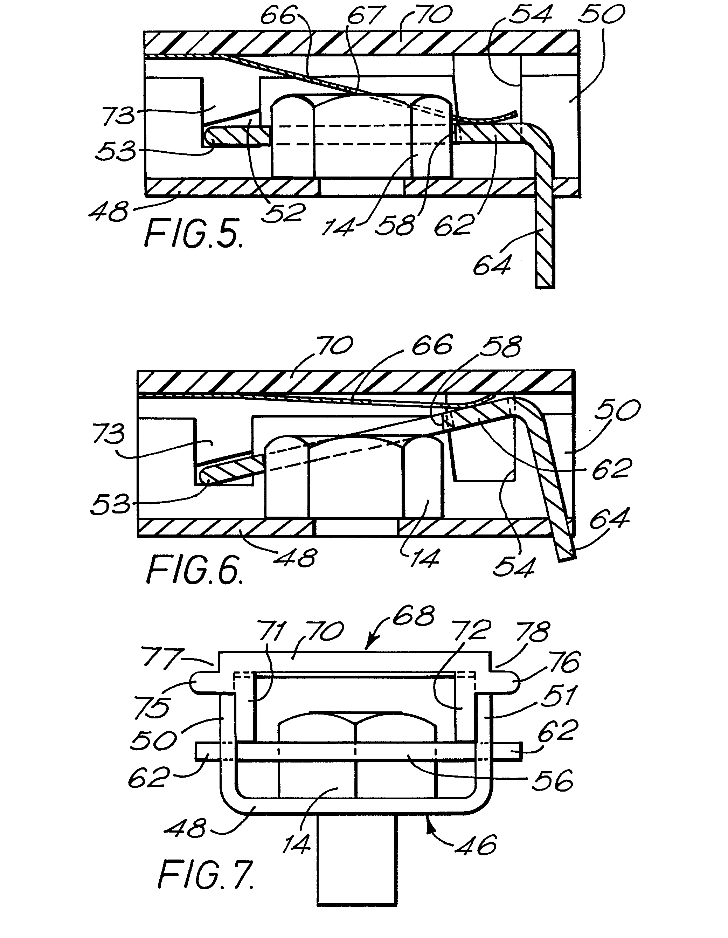

The carriage 12 (see particularly Figures 5 to 7) comprises a channel-shaped metal body 46 providing a front wall 48 and side walls 50, 51, the front wall being apertured centrally for the mounting bolt 14. An aligned pair of first cut-outs 52 are formed in the respective side walls 50, 51 adjacent

0186961

the end of the carriage which is lowermost in Figure 1. The first cut-outs 52 are rectangular in shape and receive laterally-extending mounting tabs 53 on one end of a locking member 56 which is in the form of a plate having a central aperture 58 for the mounting bolt 14 and being pivotally-mounted in the first cut-outs 52 by way of the mounting tabs 53. The mounting tabs 53 do not protrude laterally beyond the side walls 50, 51 of carriage body 46. The locking member 56 has adjacent its other end a pair of laterally-projecting locking tabs 62 which extend through the respective ones of an aligned pair of second cut-outs 54 in the side walls 50, 51 of the carriage body 46 and project laterally therefrom. The second cut-outs 54 are almost rectangular but have their edges closer to the first cut-outs 52 slightly inclined to allow the locking tabs 62 to move arcuately during pivotal movement of the locking member 56. At the free end of the locking member 56 a narrowed portion 64 of the locking member is bent through 90° and protrudes through the slot 30 in the front wall of the track 10 to provide an actuator for the locking member 56. The outer end of the narrowed portion 64 carries the push button 22. A leaf spring 66 of similar dimensions to the locking member 56 biasses the locking member 56 towards the front wall 48 and into its locking position in which the tabs 62 are located at the inner ends of the second cut-outs 54. The spring 66 has a central aperture 67 for the head of the mounting bolt 14. The carriage 12 is completed by a moulded plastics component 68 of ABS or similar material which closes the open rear of the channel-shaped body 46. The component 68 has a generally-rectangular main part

0186961

70 and opposed side walls 71, 72 which are a snap fit inside the side walls 50, 51 of the body 46. The side walls 71, 72 have thickened portions 73 which protrude into the first cut-outs 52 in the side walls 50, 51 of the body. The thickened portions 73 do. not extend to the inner ends of the cut-outs 52 but stop short to leave recesses in which the mounting tabs 53 of the locking member 56 are retained. The inner ends of the thickened portions 73 are suitably inclined to allow pivotal movement of the locking member 56.

Along its outer sides, the component 68 has respective outwardly-projecting ribs 75, 76 which are positioned forwardly of the main part 70 and thus form recesses 77, 78 in which the inwardly-turned flanges 36, 37 of the track 10 are received when the carriage 11 and track 10 are assembled.

The track 10 and carriage 12 are shown assembled in Figure 1, this assembly being made possible by the flanges 36, 37 on the track 10 being interrupted at the lower end of the track and thus allowing the carriage to be fitted to the track from behind, the slot 30 extending sufficiently towards the lower end to allow the mounting bolt 14 to be received in the slot as the carriage is fitted. As will be appreciated from Figures 3, 4, 5 and 6, when the locking member 56 is in its released position shown in Figure 6, the locking tabs 62 are located in the grooves 38, 39 in the side walls 26, 27 of the track 10 and the carriage can be moved along the track. When the locking member 56 is in its locking position, as shown in Figure 5, and the carriage is at one of its three locking positions the locking tabs 62 are located in respective ones of a pair of apertures 44 in the side walls 26, 28 and the carriage is thus locked against movement along the track. Since the spring 66 biasses the locking member 56 towards its locking position, the carriage is securely retained in position on the track.

To adjust the position of the carriage 12 relative to the track 10, the push button 22 is depressed to cause pivotal movement of the locking member 56 against the bias of the spring 66. The locking tabs 62 are thus freed from the apertures 44 of the track 10 and move rearwardly into the grooves 38, 39. With the locking tabs 62 in this position, the carriage 12 can be slid manually along the track 10 to a different desired position where the locking tabs 62 are re-engaged with a different pair of apertures 44. During this movement, the push button 22 can be released since the spring 66 will bias the locking tabs 62 of the locking member 56 against the inclined walls 34, 35 of the grooves 38, 39 until the locking tabs 62 enter the flared portions of the apertures 44 and the locking member then returns to the locking position and the carriage is locked to the track 10 at the new desired position.

It will be appreciated that the present invention includes in its scope many anchorages additional to the embodiment described. This embodiment may be modified in many ways, for example by changes in the cross-section shape of the channel member.

The anchorages of the invention are particularly suitable for mounting in a substantially concealed position behind the front surface of the
"B" post of a motor vehicle body.

0186961

CLAIMS

1. An adjustable shoulder anchorage for a vehicle seat belt system, comprising a track between opposed side walls of which a carriage having support means for a belt of a seat belt system is located for sliding movement along the track, each side wall having a plurality of spaced-apart apertures or recesses defining positions at which the carriage can be locked to the track and the carriage having manually-operable locking means which include locking elements which protrude laterally from the carriage at respective sides thereof and are movable in a direction transverse to the plane of movement of the carriage between a locking position in which they are engaged in respective side wall apertures or recesses and the carriage is locked to the track and a released position in which they are disengaged from the apertures or recesses and the carriage is released for movement along the track.

2. An adjustable shoulder anchorage according to claim 1, in which the track side walls are connected by a web portion to provide the track with a channel shape.

3. An adjustable shoulder anchorage according to claim 2, in which the belt support means protrude through a longitudinal slot in the web portion.

4. An adjustable should anchorage according to claim 2 or 3, in which the carriage is supported on inturned flanges at the free edges of the side walls.

5. An adjustable shoulder anchorage according to any preceding claim, in which the side walls are shaped to accommodate the locking elements between the side walls and the carriage in the release position, the track having a groove extending along the inner surface of each side wall to accommodate the locking elements in the released position and the apertures or recesses in the side walls opening into one side wall of the grooves to allow the locking elements to move from their respective grooves into the apertures.

6. An adjustable shoulder anchorage according to claim 5 when dependent from claim 4, in which the grooves are bounded along one longitudinal edge by the inturned flanges.

7. An adjustable shoulder anchorage according to claim 5 or 6, in which the side walls of the grooves into which the apertures or recesses open are inclined such that the depth of the grooves decreases in the direction of movement of the locking elements from the released to the locked position.

8. An adjustable shoulder anchorage according to any preceding claim, in which the extent of the side wall apertures or recesses longitudinally of the track increases in the direction of movement of the locking elements from the locked to the released position from an extent substantially equal to that of the locking elements.

9. An adjustable shoulder anchorage according to any preceding claim, in which the locking elements comprise laterally-extending tabs on a generally-planar locking member which is mounted on a body member of the carriage for movement in response to operation of the locking means.

12. 0186961

10. An adjustable shoulder anchorage according to claim 9, in which the locking member is pivotally-mounted on the carriage bcdy member.

11. An adjustable shoulder anchorage according to claim 9 or 10, in which the locking member is resiliently biassed into the locking position.

12. An adjustable shoulder anchorage according to any preceding claim, in which the locking means include a manually-operable push button for releasing the locking means.

13. An adjustable shoulder anchorage according to any preceding claim, in which the carriage includes a component of plastics material which provides a surface on the carriage which is in sliding contact with the track.

14. An adjustable shoulder anchorage according to claim 13, in which the plastics component closes the open face of a channel-shaped carriage body which has a locking member pivotally-mounted on laterally projecting elements projecting into cut-outs in the side walls of the body, the plastics component having formations also protruding into the cut-outs to close the cut-outs and retain the locking member.

0186961

1/2

FIG.1.

FIG.2.

FIG.3.

FIG.4.

2/2

FIG.5.

FIG.6.

FIG.7.

0186961

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | FR-A-2 539 363 (SAFETY TRANSPORT) <br> * Whole document * | 1 | B 60 R 22/20 |
| A | GB-A-2 070 414 (BMW) <br> * Whole document * | 1 | |
| A | DE-A-2 947 391 (VOLKSWAGEN) <br> * Whole document * | 1 | |

**TECHNICAL FIELDS SEARCHED (Int. Cl.4)**

B 60 R

The present search report has been drawn up for all claims

| Place of search | Date of completion of the search | Examiner |
|---|---|---|
| THE HAGUE | 07-03-1986 | HEROUAN E. |